# EUROPEAN PATENT APPLICATION

(11) **EP 4 160 521 A1**
(43) Date of publication of application: **05.04.2023**
(21) Application number: 21205276.5
(22) Date of filing: 28.10.2021
(51) Int. Cl.: G06T 3/00, G06T 19/00, G02B 27/01

(54) **PROCESSING A PICTURE SECTION WITH AN AUGMENTED REALITY DEVICE**

(30) Priority: 30.09.2021 EP 21200197
(71) Applicant: Siemens Aktiengesellschaft, 80333 München (DE)
(72) Inventor: Schoo, Sven, 76474 Au am Rhein (DE); Sudharsan, Nischita, 82031 Grünwald (DE)
(74) Representative: Siemens Patent Attorneys

(57) **Abstract**

What is proposed is a method for processing a picture section with an augmented reality (AR) device, wherein the AR device comprises at least one display unit (DU) with an optical recognition system (ORS) for taking pictures and a spatial understanding system (SUS), comprising the steps of:
a) generating a frame structure (F1, F2) and superimposing the frame structure on a picture section of interest within a display field of view (FV) of the AR device,
b) determining the coordinates of the frame (F1) on the spatial mesh created by the spatial understanding system (SUS),
c) taking a picture (P) of the field of view (FV) and storing simultaneously the coordinates of the frame (F1) containing the picture section of interest,
d) converting the coordinates of the frame (F1) into coordinates of the optical recognition system (ORS),
e) projecting the converted frame coordinates onto the coordinates of the picture (P) and cutting out the picture section of interest included in the frame (F1)
f) sending the cut-out picture section and/or its spatial mesh coordinates to a server (S) for further processing.

## Description

The present disclosure is directed to a method for processing a picture section with an augmented reality device, wherein the device comprises at least one display unit with an optical recognition device for taking pictures and a spatial understanding system, according to claim 1. Furthermore, the present disclosure is directed to an augmented reality device according to claim 5 and a computer program according to claim 6.

Augmented reality (AR) can be defined as a system that incorporates a combination of real and virtual worlds, real-time interaction, and accurate 3D registration of virtual and real objects. Thus, AR is an interactive experience of a real-world environment where the objects that reside in the real world are enhanced by computer-generated perceptual information. AR is also often referred to as Mixed Reality.

One of the most famous examples of such an AR system is Microsoft^{®} HoloLens. Those Mixed-Reality glasses allow a user, with the support of a natural user interface to create interactive 3D projections in the environment of the user.

The HoloLens is a head-mounted display unit with integrated sensors, speakers, and a processor unit on its own. Such AR devices usually also contain cameras. Whereas AR devices usually are used to enhance natural environments with digital information "overlaid" on the real world, they are also suited to take out information of the real world for further digital processing. One such use case is taking pictures of QR codes, text or objects and sending it to a server for further analysis, for example: for OCR (Optical character recognition) of specific labels. This application is widespread, in industry, manufacturing or in the healthcare section. For instance, in the environment of process industry, like in a chemical or pharmaceutical plant, identifiers of assets in a technical plant must be identified and often a picture shall be taken for further applications.

However, a problem in a plant with a plurality of identifiers could be, that a picture taken from an AR device could contain several identifiers or assets in places very close to each other, and that a user wants to select only one specific label to take a picture of. In addition, in cases where the picture is taken off from far, more identifiers are fitting within the field of view of the camera of the AR device. The user may not be able to access the identifier closely to make an exact picture of a specific identifier, for example if the label is on a ceiling or hazardous blocked off area. In these cases, while the location of the identifier within a picture may be used for a rough estimate on the real -world x,y,z coordinates of the identifier, the depth at which the label or identifier is located, is missing.

Since AR devices do not possess focusing functions, it is common to take the picture from the device and then perform post-processing of the picture to roughly crop out the center portion of the picture and then send it to a server for further analysis. However, this relies heavily on the assumption that the center portion of the picture is where the label is located. The user is forced to position its head and gaze to look at the label (if wearing a head-mounted AR device) or keep hands still (if using a hand-held AR device) and then remain still for a few seconds while the picture is taken. The gaze location is then indicative of the position where the label exists. However, if the user moves or is looking elsewhere while taking a picture, the location and picture are both taken inaccurately resulting in faulty label identification. Gaze location, i.e., a form of input in an AR device that interacts with the world based on where the user is looking, is difficult and several additional sensors right next to the eyes inside the headset of AR device are necessary to provide a technical solution. Furthermore, the camera system on the augmented reality device recognizes the location of identifier labels placed at different positions throughout a technical plant only if other special, additional identifiers or markers are placed at previously exactly defined locations within the field of view. This technology has the drawback that special, additional markers must be placed at exactly defined locations in the plant.

Thus, there is a need for a method that allows for an easy selection of a specific picture section of interest for example with a label or identifier while also inferring the exact world- coordinates of the section of interest, regardless of the distance from where the picture is taken with an AR device.

An objective of the present invention is to manipulate and process a picture taken by an AR device while simultaneously deriving the exact local coordinates of the picture section of interest.

The problem is solved by a method for processing a picture section with an augmented reality device according to claim 1. Furthermore, the problem is solved by an augmented reality device according to claim 5 and a computer program according to claim 6. Advantageous aspects of the invention are the subject of the dependent claims.

According to the invention, a method for processing a picture section with an augmented reality device is proposed. The device comprises at least one display unit with an optical recognition system for taking pictures and a spatial understanding system. The method comprises the steps of:
a) generating a frame structure and superimposing the frame structure on a picture section of interest within a display field of view of the AR device,
b) determining the coordinates of the frame structure on the spatial mesh created by the spatial understanding system,
c) taking a picture of the field of view and storing simultaneously the coordinates of the frame containing the picture section of interest,
d) converting the coordinates of the frame into coordinates of the optical recognition system,
e) projecting the converted frame coordinates onto the coordinates of the picture and cutting out the picture section of interest included in the frame
f) sending the cut-out picture section and/or its spatial mesh coordinates to a server for further processing.

The optical recognition system of an AR device is designed for taking static pictures of the field of view of a user. This means that a camera system being part of the AR device does not dispose of any focusing or zooming function. The invention according to claim 1 overcomes this problem and provides a method, that allows the user to extract a picture section of interest out of the whole picture as detected by the optical recognition device similar to a zooming function. In this way for example a specific label or identifier among multiple identifiers that are visible to the user in the whole scene can be pinpointed. In addition, this method also provides information on the exact position of picture section of interest (including for example a label/identifier) in the users' world-space.

There are multiple advantages of the invention, especially if the picture section of interest (including for example a label/identifier) is then used to fetch e.g., process-data of a single piece of equipment that is associated with the identifier contained in the picture section. Together with the information on the location of the picture section, those data could then be shown to the user in the form of holograms near the actual equipment. Another important application is the alignment of the world-spaces among different AR devices. World coordinates as calculated by the spatial understanding system are not actual GPS positions with a real-world reference, but a location within the virtual world as seen by the user. The world coordinates of another AR device could be different from the ones defined by the current users' device. However, having extracted a specific picture section of interest and its position in the current users' virtual world, this information can then be passed to another AR device. Once the second device has selected the same picture section of interest, it will also be provided with the coordinates in the virtual world of the second user. Since the same physical picture section of interest including for example an identifier of a technical plant is selected by both users, the information provided by the method described here, can be used to rotate the world coordinate system as defined by one device to match or synchronize the coordinate system of the other device ensuring that, across different devices, all users share the same view on the real world.

Another advantage of the invention is that it does not require any additional infrastructure or labels to be placed in a technical plant. Therefore, the effort for using augmented reality technology in a technical plant significantly decreases, which is a necessary requirement for making it profitable at all. More than this, implementing the method claimed requires no wireless communication (e.g., via beacons or WLAN access points). This results in a reduction of implementation effort and in an availability in plant areas with a potentially explosive atmosphere.

The problem as described above is also solved by an augmented reality device according to claim 5, comprising at least one display unit with an optical recognition system, a spatial understanding system, a processor, an internal memory, a coordinate conversion system, a projection matrix system, and an interface to an external server, each system being either part of the AR device or being an external system component outside of the AR device connected by communication means.

Features of examples of the present disclosure will become apparent by reference to the following description of an exemplary embodiment of the invention.

Thus, the invention is explained below using examples with reference to the figures, in which:
- Figure 1: shows a sketch illustrating the features of the invention in accordance with an exemplary embodiment of the present disclosure (single user use case) .
- Figure 2: illustrates a flow chart of a method for processing a picture section with an augmented reality device in accordance with an exemplary embodiment of the present disclosure.
- Figure 3: shows an example of usage of the invention in an industrial plant environment.
- Figure 4: illustrates a simplified block diagram of a system in accordance with an exemplary second embodiment of the present disclosure (multi-user use case).

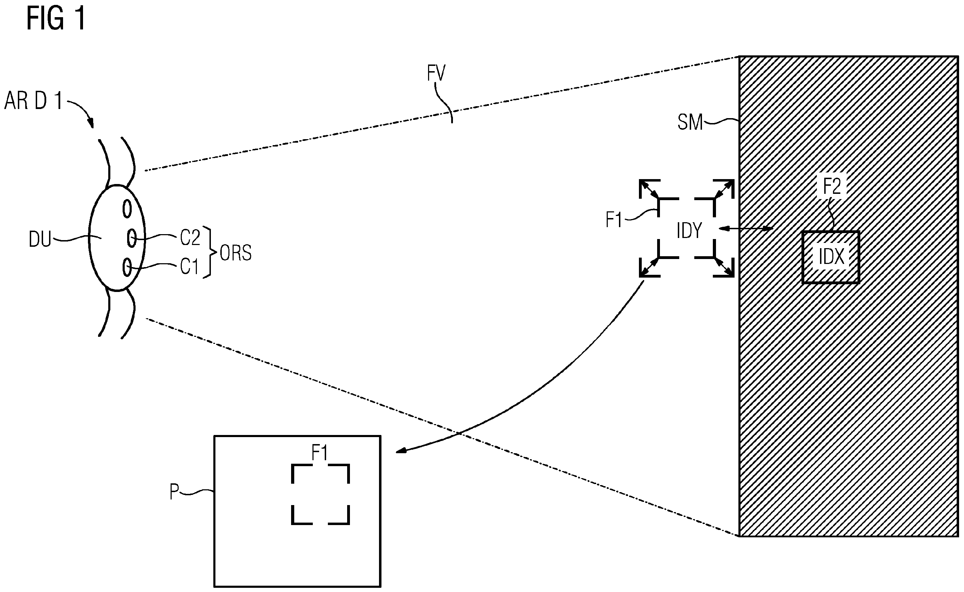

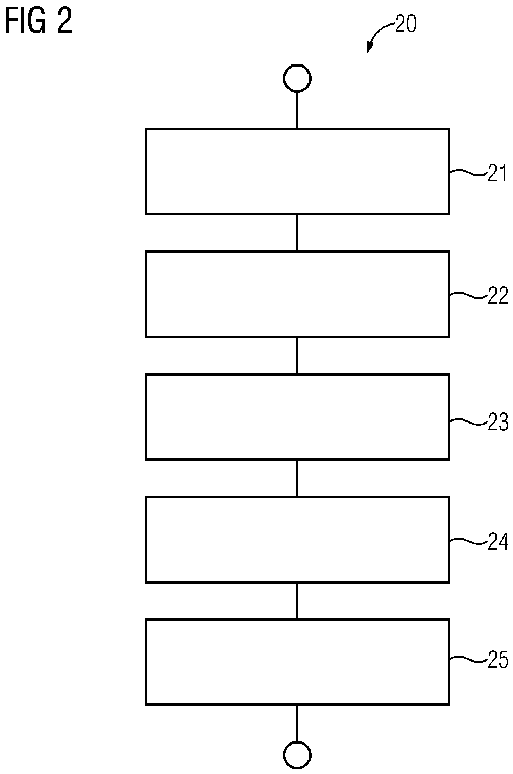

Figure 1 shows a sketch illustrating the features of the invention. In Fig 2 the single steps of the method for processing a picture section with an augmented reality device in accordance with an exemplary embodiment of the present disclosure are outlined.

On the left-hand side of Fig. 1 an AR device ARD1 is illustrated being a head mounted display unit DU in this embodiment, which can be worn on the head of a user. It is important to mention that the invention is not limited to head mounted AR devices but can also be implemented on any AR device which can be a smartphone, tablet, glasses, or the like. The invention relates to each device which is designed for providing additional virtual information to "classical" optical information (Mixed Reality).

The display unit DU of the AR device ARD1 in Fig. 1 further comprises an optical recognition system ORS which in most cases will be a camera system which usually comprises a number of single cameras C1, C2, ..., picture sensors, video cameras or the like. The optical recognition system ORS is designed for gathering optical information like taking a picture or photo and making this optical information available for the augmented reality device.

The optical recognition system ORS of the augmented reality device ARD1 is designed for taking static pictures of the field of view FV of a user. This means that such a camera device does not dispose of any focusing or zooming means. In the example of Fig. 1 the camera system ORS is directed at an environment containing several identifier labels IDX and IDY. The camera also could be directed at an arbitrary detail within a room or within any environment inside or outside a room. The user then wishes to take a picture of a certain picture section of interest. Picture section in this context means a two-dimensional area which is cut out of a larger picture. In most cases this picture section will be a square or rectangular area, but every other form may be taken.

The AR device further comprises of a spatial understanding system SUS or is connected to a spatial understanding system SUS.

Spatial Understanding generally involves transforming so called spatial mesh data of an AR device to create simplified and/or grouped mesh data such as planes, walls, floors, ceilings, etc. Thus, a spatial understanding system is the interconnection between the "real-world" and the "virtual world". It provides real-world environmental awareness in mixed reality applications. Each AR device interacting with such an awareness or understanding system will create a collection of meshes, representing the geometry of the environment, which allows interactions between the holograms and the real-world. This way a spatial understanding system resembles a kind of spatial mapping. This is done through computational geometry and computer-aided engineering that create a mesh that lays over the environment of the user. All devices generate this mesh, which looks like a series of triangles placed together like a fishing net. Such a spatial mesh SM of a room is depicted in Fig. 1. The data of the mesh are updated continuously. The AR device understands the geometric mesh as a spatial coordinate system. The mesh coordinates are often denoted as world coordinates.

According to a first step of the invention (step 21 in Fig. 2) a frame structure F1 or F2 is created by a software which could be implemented within the AR device and the frame structure is superimposed within the display field of view FV of the AR device, being seen by the user and being detected by the optical recognition system. The frame moves with the user and is always existing in front of the user, i.e., in the field of view of the user. So, if the user moves and walks around the environment, then this frame also follows and moves with the user, while it is kept on the physical surface in front of the user using the spatial mesh provided by the spatial understanding system.

While the user of the AR device is moving around, the coordinates of the frame F1 on the spatial mesh of the AR device are determined continuously (step 22 in Fig. 2), since the frame is interacting with the spatial mesh in real time. AR devices are scanning their environments continuously for surfaces, walls, obstacles, objects etc. using the spatial understanding or spatial awareness technology. This spatial information is then stored in the spatial mesh. The mesh represents the geometry of the environment around it. This mesh can be used to place the rectangular frame onto the mesh of the real-world environment. That means, this mesh is also moving and colliding with the identifiers/labels which are placed in the real-world environment. The frame therefore is located on the mesh and all information of depth is available too.

The size of the frame can be increased/decreased to adjust the portion of the screen that is later scanned for possible identifiers (compare frame sizes around identifier IDY in Fig. 1). Because of the interaction of the frame with the spatial mesh, the coordinates of the frame are adjusted too. Adjusting the size of the frame F1 to the picture section of interest means adjusting the respective coordinates on the spatial mesh.

When the user has finished adjusting the size of the frame, the user may take a picture P of the whole field of view FV. (Step 23 in Fig. 2) Simultaneously the coordinates of the (in size) adjusted frame F1 containing the picture section of interest with the coordinates of the spatial mesh are stored. On taking the picture, the world-coordinates of the corners of the frame are stored prior to triggering the actual picture-taking. By doing so, it can be ensured, that the selection within the real world is kept the same, even if the user moves the camera slightly while the camera is taking the picture, which takes a couple of seconds. If the user keeps the original frame within the field of view of the camera, these small movements will not be a problem. This step ensures that for example the correct identifier is chosen to be in the frame, and therefore in the picture finally taken.

In a next step (24) the coordinates of the frame F1 are converted into the coordinates of the optical recognition system ORS. This is necessary because the picture taken before by the camera has the coordinates of the camera and considers only the characteristics of the camera. This whole procedure is necessary, because the location of the camera, its orientation, and field of view, etc. do not match what is actually presented to the user in the field of view. Then (step 25) the converted frame coordinates are projected onto the coordinates of the picture P and the picture section of interest included in the frame is cut out of the picture P. Since now the coordinates of the frame are known in the coordinate system of the picture, this square or rectangle can be used to finally cut out only this specific part of the picture containing the identifier, which is then sent together with its coordinates to a server for processing of the actual identifier. The term "coordinates" means at least the coordinates of each corner of the square or rectangular, i. e. all coordinates along the circumference of the picture section or a certain range of it.

There are two general use cases for which the invention can be applied for.

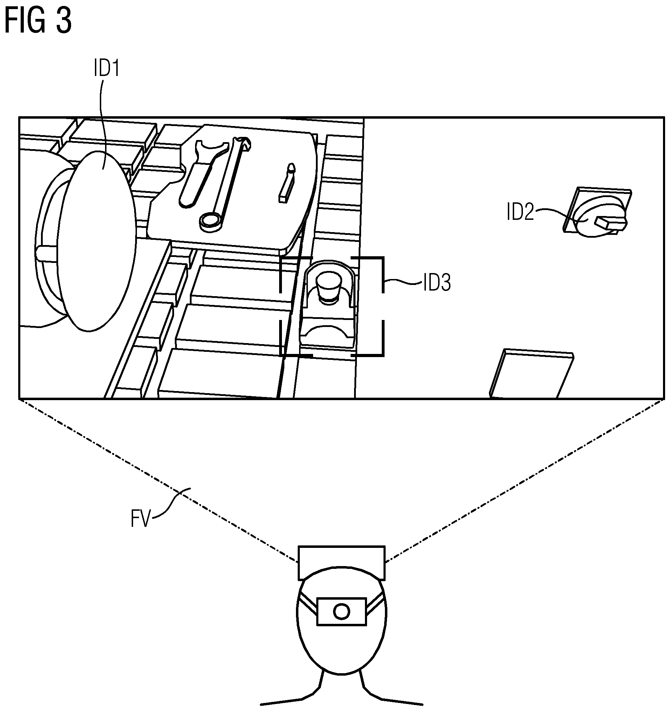

In a first use case a single user uses one AR device in accordance with the first exemplary embodiment of the present disclosure according to Fig. 3. In this use case the method as described above may be used to exactly pinpoint the location of a picture section of interest within the field of view of an AR device of a single user. This is especially applicable if a particular identifier has to be chosen amongst several identifiers in one large field of view.

According to this embodiment the invention can preferably be applied in a technical plant environment as shown in Fig. 3. In such an environment the camera system can be directed on an identifier label of a component of the technical plant. The identifier label can be a textual label but also a label in form of bar, QR, or other codes. The identifier label usually is associated to a device of the technical plant, i.e., it is a characteristic of this component, providing a clear identification feature.

A "technical plant" can be a plant in process industries like a chemical or a pharmaceutical plant. This also includes any plant from the production industry, plants in which e.g., cars or goods of all kinds are produced. Technical plants that are suitable for carrying out the method according to the invention can also come from the field of energy generation. Wind turbines, solar plants or power plants for power generation are also covered by the term of technical plant.

In Fig. 3 there are three identifier labels ID1, ID2 and ID3 shown in the field of view FV of the user. Using the method according to our invention the user may now select a certain identifier of interest and place the frame structure around it. Here the user wants to pick out ID3 of the emergency push button. According to the claimed method as described above, the user may now extract the picture of the specific identifier ID3 among multiple identifiers that are visible to the user in the whole scene. In addition, this method also provides information on the exact position of the ID3 in the users' world-space. The added advantage is to take a picture of selected identifiers which are placed far away from the reach of the user, for example on the ceiling, or between some pipes etc. Therefore, the user has the freedom to move the frame with his/her gaze and position it and fit it to just around the identifier of choice. Then the user will take a picture of the identifier which then is sent for further desired analysis.

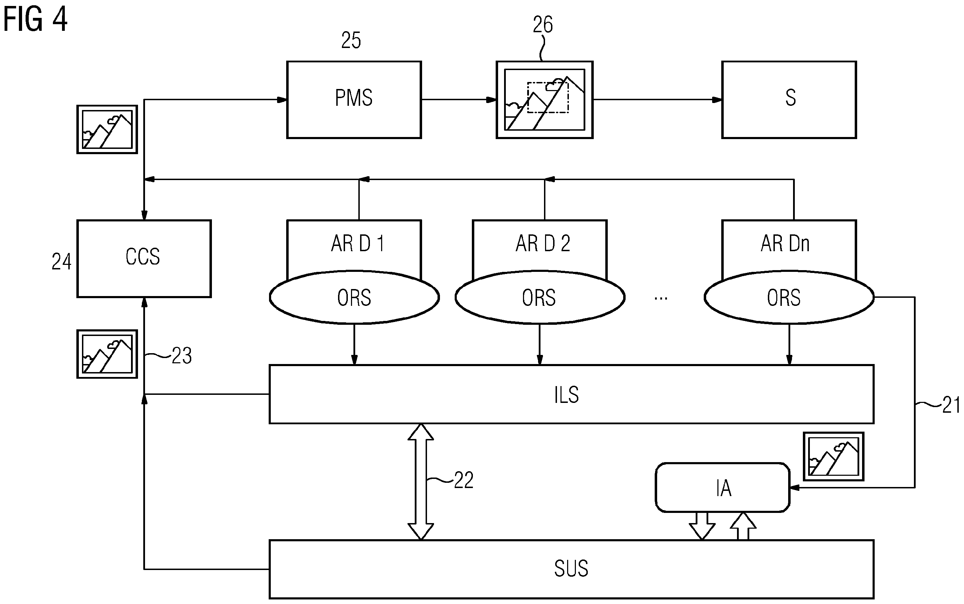

In a second use case there are at least two users, each user being furnished with an AR device, using the claimed method in accordance with the first exemplary embodiment of the present disclosure according to Fig. 1. Here the method is applied for synchronization of at least two AR devices. A respective exemplary embodiment is shown in Fig. 4. There, a number n of AR devices ARD1, ARD2, ... ARDn, each comprising an optical recognition system ORS, are shown. Each of those devices is connected with a spatial understanding system SUS comprising an identifier locating system ILS. This means that all AR devices utilize the same world coordinates and thus are using the same spatial mesh. This however is only possible if all AR devices are synchronized. Normally each AR device comprises its own spatial understanding system SUS, thus having different world coordinates and having different spatial meshes. By using the method of processing a picture section according to claim 1 a first user (with ARDn in Fig. 4) locates an object. In this embodiment the object is an identifier asset IA of a technical plant. The invention however is not limited to such objects. The first user with ARDn generates a frame structure and places it on the identifier asset IA (step 21). The spatial understanding system SUS determines the coordinates of the frame around the identifier asset IA on the spatial mesh of the AR device which corresponds to the identifier location (step 22). Those coordinates correspond to the world coordinates of the first user. Once a picture is taken of the whole field of view of the OCR of ARDn, the world coordinates of the identifier asset IA are stored (step 23) and sent to the coordinate conversion system CCS, where the world coordinates of the frame are converted into the coordinates of the ORS of ARDn (step 24). In the next step the converted frame coordinates are sent to a projection matrix system PMS, where they are projected onto the ORS coordinates of the picture (step 25). Therefore, the AR devices with their optical recognition devices are connected with the projection matrix system PMS to transmit the coordinates of the picture taken of the whole field of view of the OCR of ARDn. Then the picture section with the identifier asset is cut out (step 26). For the cropping of the picture section a further module or system could be implemented. Finally, the cut-out picture section and its world coordinates of IA are sent to a server S.

If a second user enters the same room, the second user wants to see the identifier asset IA at the same position or location as the first user. The problem is that both users have their own coordinate systems (and spatial meshes) which interact with their AR devices. Thus, the world coordinates of the first user can be shifted or rotated compared to the world coordinates of the second user and be transferred to the second user. If the second user receives the world coordinates of IA as processed by means of the AR device of the first user, the SUS and ILS can adjust their spatial mesh and world coordinates accordingly. The synchronization can be triggered by a signal from server S or the synchronization can be triggered by the users. As a result, both users are connected via their AR devices to the same SUS and ILS. If the server S stores the world coordinates of a reference object as determined with a first AR device, an arbitrary number of AR devices can be connected to the same SUS and ILS as shown in Fig. 4.

## Claims

1. A method for processing a picture section with an augmented reality (AR) device, wherein the AR device comprises at least one display unit (DU) with an optical recognition system (ORS) for taking pictures and a spatial understanding system (SUS), comprising the steps of:
a) generating a frame structure (F1, F2) and superimposing the frame structure on a picture section of interest within a display field of view (FV) of the AR device,
b) determining the coordinates of the frame (F1) on the spatial mesh created by the spatial understanding system (SUS),
c) taking a picture (P) of the field of view (FV) and storing simultaneously the coordinates of the frame (F1) containing the picture section of interest,
d) converting the coordinates of the frame (F1) into coordinates of the optical recognition system (ORS),
e) projecting the converted frame coordinates onto the coordinates of the picture (P) and cutting out the picture section of interest included in the frame (F1)
f) sending the cut-out picture section and/or its spatial mesh coordinates to a server (S) for further processing.

2. A method according to claim 1,
wherein a size of the frame (F1) is adjusted to the picture section of interest and the respective coordinates on the spatial mesh are adjusted.

3. A method according to one of the preceding claims, wherein the picture section of interest is an identifier label of an asset of a technical plant.

4. A method according to one of the preceding claims, wherein the coordinates of the cut-out picture section is transferred to at least to a second AR device, wherein the spatial mesh coordinates of at least both cut-out picture sections are synchronized, such that the spatial understanding system (SUS) for at least both AR devices is basically the same.

5. An augmented reality device, comprising
- at least one display unit (DU) with an optical recognition system (ORS) for taking pictures of a field of view,
- a spatial understanding system (SUS) for determining coordinates on a spatial mesh,
- a processor configured to generate a frame structure (F1, F2) and to superimpose the frame structure on a picture section of interest within a display field of view (FV) of the AR device, to determine the coordinates of the frame structure on the spatial mesh which is created by the spatial understanding system (SUS),
an internal memory for at least storing the coordinates of the frame (F1) containing the picture section of interest while simultaneously a picture (P) of the field of view (FV) is taken,
- a coordinate conversion system (CCS) which is configured to convert the coordinates of the frame (F1) into coordinates of the optical recognition system (ORS)
- a projection matrix system (PMS) which is configured to project the converted frame coordinates onto the coordinates of the picture (P) and cutting out the picture section of interest included in the frame (F1), and
- an interface to send the cut-out picture section and/or its spatial mesh coordinates to a server (S) for further processing.

6. A computer program comprising software code portions for performing the steps of any of the claims 1 to 4, when said computer program is run on a digital computer.

7. A computer program according to claim 6, said computer program being run on a digital computer of an AR device.
